(19) **Europäisches Patentamt / European Patent Office / Office européen des brevets**

(11) **EP 4 264 808 B1**

(12) **EUROPÄISCHE PATENTSCHRIFT**

(45) Veröffentlichungstag und Bekanntmachung des Hinweises auf die Patenterteilung:
**21.08.2024 Patentblatt 2024/34**

(51) Internationale Patentklassifikation (IPC):
*H02K 21/24* (2006.01)   *H02K 1/16* (2006.01)
*H02K 1/20* (2006.01)   *H02K 16/02* (2006.01)

(21) Anmeldenummer: **21811250.6**

(22) Anmeldetag: **10.11.2021**

(52) Gemeinsame Patentklassifikation (CPC):
**H02K 21/24; H02K 1/165; H02K 1/20; H02K 16/02;**
H02K 2201/06; H02K 2213/03

(86) Internationale Anmeldenummer:
**PCT/DE2021/100896**

(87) Internationale Veröffentlichungsnummer:
**WO 2022/127971 (23.06.2022 Gazette 2022/25)**

(54) **STATORKERN FÜR AXIAL-FLUSS-MASCHINE IN H-AUSFÜHRUNG**

STATOR CORE FOR AXIAL FLUX MACHINE IN H DESIGN

NOYAU DE STATOR POUR MACHINE À FLUX AXIAL À CONCEPTION EN H

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2020 DE 102020133676**

(43) Veröffentlichungstag der Anmeldung:
**25.10.2023 Patentblatt 2023/43**

(73) Patentinhaber: **Schaeffler Technologies AG & Co. KG**
**91074 Herzogenaurach (DE)**

(72) Erfinder: **WITT, Holger**
**77815 Bühl (DE)**

(56) Entgegenhaltungen:
**WO-A1-95/33596        CN-U- 201 509 139**
**US-A1- 2014 361 653**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft einen Stator für eine elektrische Maschine, eine elektrische Maschine mit einem Stator sowie ein Fahrzeug mit einer elektrischen Maschine. Insbesondere handelt es sich dabei um eine Axialflussmaschine in H-Anordnung.

Aufgrund stetig steigender Anforderungen an Drehmoment- und Leistungsdichten bzw. weiterer Beschränkungen des Bauraums, gewinnt die Axialflussmaschine zusehends an Bedeutung, insbesondere für Applikationen im Automobil sowie in der Automatisierungstechnik. Vorteile der Axialflussmaschine gegenüber Radialflussmaschinen liegen in ihrer verkürzten axialen Länge und ihrer Effizienz. Bei gleichem Außendurchmesser wird eine höhere Drehmoment- bzw. Leistungsdichte erreicht.

Im Folgenden sind zwei Bauformen der Axialflussmaschine zu unterschieden:
Bei der sogenannten I-Anordnung (siehe Figur 1a) ist ein Rotor zwischen zwei Statorhälften angeordnet. Exemplarisch sei hier die Druckschrift CN 109194082 A angeführt, die eine Ausführungsform einer solchen Maschine zeigt.

Bei der sogenannten H-Anordnung (siehe Figur 1b) ist ein Stator zwischen zwei Rotorhälften angeordnet. Exemplarisch sei hier die Druckschrift EP 2 606 561 B1 erwähnt, die eine Ausführungsform einer solche Maschine zeigt.

Für alternative Bauformen sei auf die Literatur verwiesen. Exemplarisch sei noch die EP1538727 erwähnt, eine Axialflussmaschine mit einem Stator und einem Rotor offenbart.

So zeigt die EP3485558 eine Axialflussmaschine in H-Anordnung wobei die elektrische Maschine als jochfreie Maschine bezeichnet wird. Die Wicklungen befinden sich auf Statorkernen, welche zwischen Kühlfahnen geklemmt oder eingegossen / verklebt werden, welche wiederum mit dem Außengehäuse verbunden sind. Die Kühlfahnen sind dabei insbesondere Bestandteil des Gehäuses ausgeprägt und als Blechpaket realisiert.

Die US9071117BB zeigt eine Axialflussmaschine in H-Anordnung, bei der die Fixierung der Statorzähne realisiert ist, indem diese in Scheiben mit Taschen geklebt werden. Die Scheiben bilden insbesondere ein geschlossenes Gehäuse aus, welches mittels eines Kühlmediums durchströmt werden kann.

Ebenfalls eine Axialflussmaschine in H-Anordnung ist in der KR101070230 B1 gezeigt. Insbesondere ist hier ein Statorkern dargestellt, bei auf beiden Seiten einer Trägerscheibe, einander gegenüberliegend Statorzähne angeordnet sind, auf welche dann Einzelwicklungen aufgebracht sind.

Ein Stator gemäß dem Oberbegriff des Anspruch 1 ist in der WO 95/33596 A1 ofenbart. Hinsichtlich weiterm Stand der Technik sei auf die CN 201 509 139 U sowie die US 2014/361653 A1 verwiesen.

Insbesondere aufgrund der konstruktiven Gegebenheiten, unterliegt der Stator oftmals gegenläufig Anforderungen: Einerseits ist eine hohe mechanische Stabilität sowie die Gewährleistung elektromagnetischer Eigenschaften gefordert, dem gegenüber stehen eine Reduktion im axialen Bauraum sowie Möglichkeiten zur Kühlung, die Aufgrund der benötigten Volumina weiter im Widerspruch zu einer optimalen Bauraumausnutzung stehen.

Aufgabe der vorliegenden Erfindung ist es daher Lösungen für eine optimierte Bauraumausnutzung unter Gewährleistung mechanischer Stabilität sowie elektromagnetischer Eigenschaften unter Beachtung geeigneter Kühlkonzepten bereitzustellen.

Die Aufgabe wird durch die in den unabhängigen Ansprüchen beschriebenen Maßnahmen gelöst. Weitere vorteilhafte Ausgestaltungen sind in den abhängigen Ansprüchen beschrieben.

Gemäß einem Aspekt beinhaltet der Stator einer elektrischen Maschine in Axialflussbauweise eine Rotationsachse und einen Statorkern, welcher eine bauliche Einheit ausbildet. Dabei umfasst der Statorkern einen ersten Bereich, der zu einer ersten axialen Außenseite hin ausgerichtet ist. Dieser bildet abwechselnd in Umfangsrichtung Statorzähne und Wickelnuten an der ersten axialen Außenseite aus.

Weiter umfasst der Statorkern einen zweiten Bereich, der zu einer zweiten axialen Außenseite hin ausgerichtet ist. Dieser bildet abwechselnd in Umfangsrichtung Statorzähne und Wickelnuten an der zweiten axialen Außenseite aus.

Dabei sind die Statorzähne des ersten Bereichs versetzt zu den Statorzähnen des zweiten Bereichs ausgerichtet. Die Wickelnuten des ersten Bereichs sind zu den Wickelnuten des zweiten Bereichs auf einer äußeren radial umlaufenden Fläche in Umfangsrichtung derart beabstandet, dass auf der äußeren radial umlaufenden Fläche in axialer Richtung keine Überdeckung der Wickelnuten des ersten Bereichs zu den Wickelnuten des zweiten Bereichs entsteht.

Als Statorzähne werden dabei die Bestanteile des Statorkern bezeichnet, die als umfänglich beabstandete, zahnartig axial nach außen gerichtete Ausprägungen des Statorkörpers ausgebildet sind und zwischen deren freien Enden und einem Rotor ein Luftspalt für das Magnetfeld gebildet ist.

Insbesondere kann durch diese Anordnung die mechanische Stabilität erhöht werden, ohne dass die axiale Baulänge erhöht wird, da durch die beabstandete Ausrichtung der Wickelnuten genügend Material zwischen einem Statorzahn des ersten Bereichs und einem diagonal benachbarten Statorzahn des zweiten Bereichs verbleibt. Dies wirkt sich ebenfalls positiv auf die elektromagnetischen Eigenschaften des Statorkerns aus.

In einer vorteilhaften Ausgestaltung liegen jeweils der Statorzahn des ersten Bereichs und eine Wickelnut des zweiten Bereichs derart gegenüber, dass die Überdeckung, gemessen in Umfangsrichtung auf einer äußeren radial umlaufenden Fläche als Abstand $d_U$, des Statorzahns des ersten Bereichs zu einem ersten diagonal benachbarten Statorzahn des zweiten Bereichs weniger als 10% abweicht von der Überdeckung des Statorzahns des ersten Bereichs zu einem zweiten diagonal benachbarten Statorzahn des zweiten Bereichs.

Gemäß einer Ausgestaltung umfasst der Stator eine erste Spulenanordnung im ersten Bereich, wobei die erste Spulenanordnung abschnittsweise in den Wickelnuten des ersten Bereichs beinhaltet ist. Weiter umfasst der Stator eine zweite Spulenanordnung im zweiten Bereich, wobei die zweite Spulenanordnung abschnittsweise in den Wickelnuten des zweiten Bereichs beinhaltet ist.

Insbesondere wird durch die Verwendung der ersten Spulenanordnung und der zweiten Spulenanordnung eine vereinfachte Montierbarkeit des Stators ermöglicht.

Gemäß einer weiteren Ausgestaltung des Stators weisen die Wickelnuten des ersten Bereichs zu den Wickelnuten des zweiten Bereichs auf einer äußeren radial umlaufenden Fläche in Umfangsrichtung einen Abstand $d_U$ auf, die Wickelnuten des ersten Bereichs weisen zu den Wickelnuten des zweiten Bereichs auf der äußeren radial umlaufenden Fläche in axialer Richtung einen Abstand $d_A$ auf. Dabei definiert $k = d_A / d_U$ ein Verhältnis, wobei k < 1,5 ist, vorzugsweise k<0.5, k<0.25, k<0,1 k<0.05.

Durch den Abstand $d_A$ und den Abstand $d_U$ kann eine Länge $d_Q$ beschrieben werden gemäß

$$d_Q = \sqrt{d_U^2 + d_A^2}$$

. Die Länge da ist dabei die obere Kante einer in radialer Richtung gekrümmten Fläche, in der Überdeckung eines Statorzahns des ersten Bereichs zu einem ersten diagonal benachbarten Statorzahn des zweiten Bereichs. Insbesondere bei schmalen Statorzähnen wie bei verteilten Wicklungen erforderlich, ist k vorteilhafterweise kleiner 1,5 zu wählen, sodass trotz geringer axialer Baulänge des Statorkerns mechanische Stabilität gewährleitstet ist.

Insbesondere bei Einzelzahnwicklungen kann aufgrund breiterer Statorzähne k<0.5, besonders bevorzugt bei ungleichen Abständen $d_U$ zwischen Statorzähnen k<0.25 gewählt werden, ohne dass dies zu Lasten der mechanischen Stabilität ginge.

In einer besonders vorteilhaften Ausgestaltung ist der Abstand $d_A$ derart gering, dass die Wickelnuten einen nahezu identischen Wickelgrund aufweisen. Hier ist vorteilhafterweise k<0,1, besonders bevorzugt k<0.05 gewählt, um Fertigungstoleranzen zu berücksichtigen.

Gemäß einer weiteren Ausgestaltung des Stators ist die erste Spulenanordnung in Form einer verteilten Wicklung realisiert ebenso ist die zweite Spulenanordnung in Form einer verteilten Wicklung realisiert.

Diese Ausgestaltung wird vorteilhafterweise durch den zuvor beschriebenen Statorkern realisiert, da die bei einer verteilten Wicklung notwendigen schmaleren Statorzähne in konventioneller Bauweise zu Lasten der mechanischen Stabilität gehen würden.

Gemäß einer Ausgestaltung des Stators bilden die Statorzähne des ersten Bereichs und die Wickelnuten des ersten Bereichs ein erstes Muster an der ersten axialen Außenseite aus. Dieses erste Muster ist mehrfach rotationssymmetrisch bezüglich der Rotationsache des Stators. Weiter bilden die Statorzähne des zweiten Bereichs und die Wickelnuten des zweiten Bereichs ein zweites Muster an der zweiten axialen Außenseite aus. Dieses zweite Muster ist mehrfach rotationssymmetrisch bezüglich der Rotationsache.

Insbesondere sind das erste Muster und das zweite Muster kongruent und das erste Muster ist gegenüber dem zweiten Muster um einen Winkel derart verdreht, dass die Statorzähne des ersten Bereichs den Wickelnuten des zweiten Bereichs gegenüberliegen und dass die Wickelnuten des ersten Bereichs den Statorzähnen des zweiten Bereichs gegenüber liegen. Durch die mehrfache Rotationssymmetrie wird konstruktiv eine etwaige Drehmomentwelligkeit, sog. Torque-Ripple reduziert.

Bei dieser besonders vorteilhaften Ausgestaltung weicht die Überdeckung, gemessen in Umfangsrichtung auf einer äußeren radial umlaufenden Fläche als Abstand $d_U$, des Statorzahns des ersten Bereichs zu einem ersten diagonal benachbarten Statorzahn des zweiten Bereichs weniger als 20% ab von der Überdeckung des Statorzahns des ersten Bereichs zu einem zweiten diagonal benachbarten Statorzahn des zweiten Bereichs.

Bei geeigneter Ausgestaltung der Rotoren ist ein gleichmäßig verteiltes Muster als weitere Ausführungsform ebenfalls realisierbar.

Gemäß einer weiteren Ausgestaltung des Stators ist der Statorkern als ein gewickeltes Bauteil realisiert.

Insbesondere sind die Statorzähne und die Wickelnuten des ersten Bereichs sowie die Statorzähne und die Wickelnuten des zweiten Bereichs vor dem Aufwickeln beispielsweise durch Stanzen oder nach dem Aufwickeln beispielsweise mittels Fräsen, oder Drahterodieren eingebracht.

Gemäß einer weiteren Ausgestaltung des Stators ist der Statorkern aus einem weichmagnetischen Pulververbundwerkstoff realisiert.

Bevorzugt wird der Stator aus eisenhaltigem Pulver gepresst und gebacken. Die Prozesspresskraft hierfür steigt mit den Abmessungen des zu pressenden Werkstückes. Bei größeren Statorkernen können die Prozesspresskräfte unwirtschaftlich groß werden, so dass vorzugsweise der Statorkern aus einzelnen Segmenten aufgebaut wird, wobei die einzelnen Segmente getrennt voneinander gepresst werden.

Gemäß einer weiteren Ausgestaltung des Stators umfasst der Statorkern mehrere Segmente.

Insbesondere bilden jeweils mehrere benachbarte Zähne ein mechanisch steifes Bauteil. Mehrerer dieser Bauteile werden dann zu einem kompletten Statorkern zusammengefügt, wobei diese z.B. mittels Stegkomponenten zusammengehalten und mit dem Gehäuse verbunden werden. Durch eine derartige Ausgestaltung weist der Statorkern eine höhere Steifigkeit im Vergleich zu einem Aufbau mit Einzelzähnen auf. Besonders vorteilhaft ist dies bei in Umfangsrichtung kürzer werdenden Statorzähnen, wie bei einer verteilten Wicklung erforderlich.

Gemäß einem weiteren Aspekt umfasst eine elektrische Maschine einen Stator gemäß dem zuvor beschriebenen Aspekt und den zuvor beschriebenen Ausführungsformen. Dabei ist der Stator axial zwischen einem ersten Rotor und einem zweiten Rotor angeordnet.

Gemäß einem weiteren Aspekt umfasst ein Fahrzeug eine elektrische Maschine gemäß dem beschriebenen Aspekt.

Im Folgenden wird die Erfindung anhand der in den Figuren dargestellten Ausführungsform näher erläutert. Es zeigt:

Figur 1     schematische Darstellungen von elektrischen Maschinen in Axialflussbauweise in I-Anordnung (1a) sowie in H-Anordnung (1b) gemäß Stand der Technik;

Figur 2     Schnitte durch wesentliche Elemente einer elektrischen Maschine;

Figur 3     eine perspektivische Darstellung sowie eine Aufsicht des Statorkerns der elektrischen Maschine aus Figur 2;

Figur 4     einen perspektivischen Teilschnitt sowie einen Explosionsschnitt der elektrischen Maschine aus Figur 2;

Figur 5     einen perspektivischen Teilschnitt wesentlicher Komponenten der elektrischen Maschine aus Figur 2 sowie eine perspektivische Detailansicht;

Figur 6     eine Detailaufsicht des Statorkerns der elektrischen Maschine aus Figur 2.

Nachfolgend erfolgt die Beschreibung einer Ausführungsform der vorliegenden Erfindung.

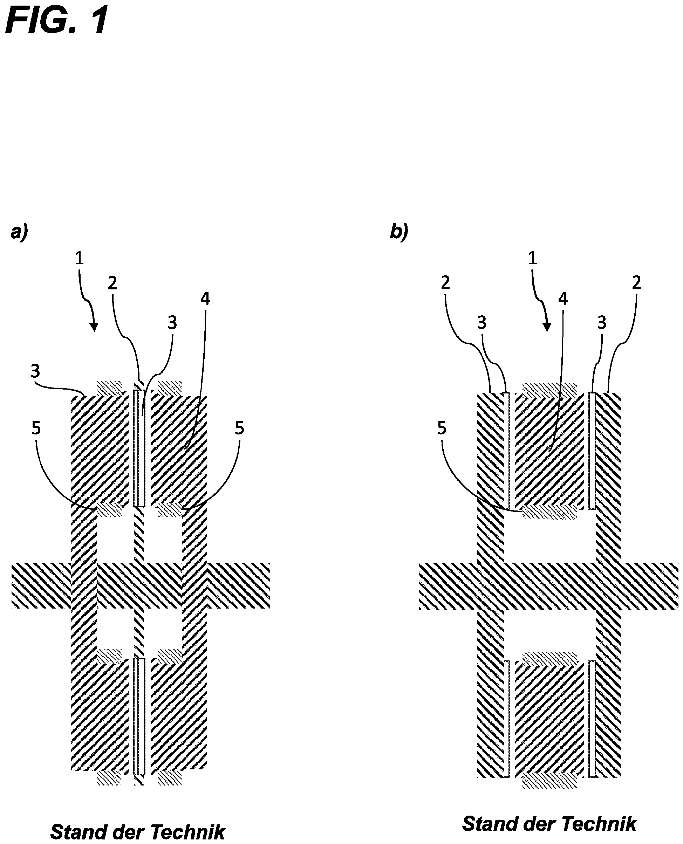

**Figur 1** zeigt schematische Darstellungen von elektrischen Maschinen 1 in Axialflussbauweise in I-Anordnung 1a sowie in H-Anordnung 1b gemäß Stand der Technik. Figur 1a zeigt die I-Anordnung einer elektrischen Maschine in Axialflussbauweise. Hierbei ist ein Rotor 2 axial zwischen zwei Hälften eines Stators 3 angeordnet. Der Rotor 2 mit Magneten 4 ist über zwei Luftspalte mit dem Spulenanordnungen 5 umfassenden Stator 3 wirkverbunden.

Figur 1b zeigt die die H-Anordnung einer elektrischen Maschine 1 in Axialflussbauweise. Hierbei ist ein Stator 3 axial zwischen zwei Hälften eines Rotors 2 angeordnet. Der Rotor 2 mit Magneten 4 ist über zwei Luftspalte mit dem Spulenanordnungen 5 umfassenden Stator 3 wirkverbunden.

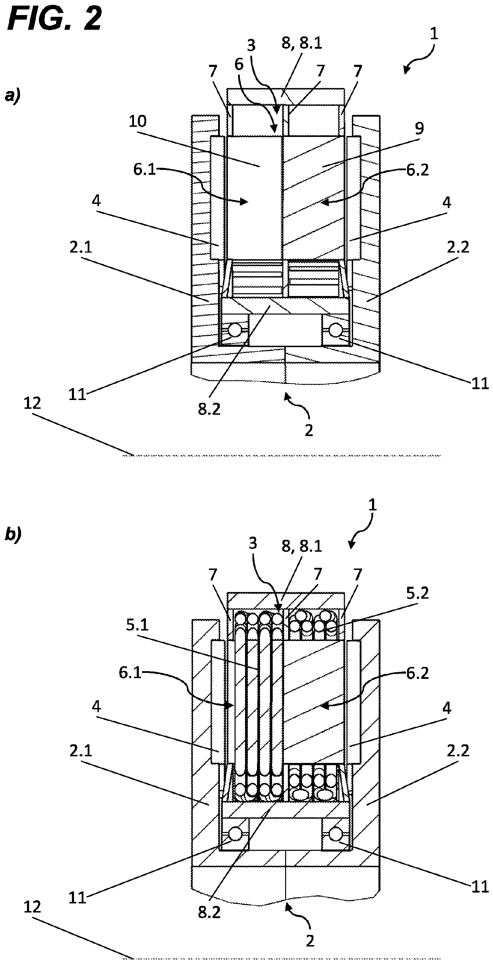

**Figur 2** zeigt Schnitte durch wesentliche Elemente einer elektrischen Maschine 1. Bei der Ausführungsform elektrischen Maschine 1 handelt es sich um eine Axialflussmaschine in H-Anordnung. Ein Rotor 2 ist dabei in einen ersten Rotor 2.1 und einen zweiten Rotor 2.2 unterteilt. Der Stator 3 ist axial zwischen den ersten Rotor 2.1 und dem zweiten Rotor 2.2 angeordnet. Der Stator 3 umfasst einen Statorkern 6, welcher radial außen über mehrere Stege mit dem Gehäuse 8 wirkverbunden ist, wobei in der Figur lediglich ein erstes äußeres Gehäuseelement 8.1 dargestellt ist. Ein zweites inneres Gehäuseelement 8.2 ist radial innen über Stege 7 mit dem Statorkern 6 wirkverbunden. Der erste Rotor 2.1 ist über eine Lagerung 11 mit dem zweiten inneren Gehäuseelement 8.2 wirkverbunden, ebenso ist der zweite Rotor 2.2 über eine Lagerung 11 mit dem zweiten inneren Gehäuseelement 8.2 wirkverbunden.

Der erste Rotor 2.1 und der zweite Rotor 2.2 stützen sich in axialer Richtung gegenseitig ab, so dass die für Axial-Fluss-Maschinen in H-Anordnung mit Magneten 4, insbesondere Permanentmagneten typischen auf den ersten Rotor 2.1 sowie den zweiten Rotor 2.2. wirkenden magnetischen Anziehungskräfte in Richtung Stator 3 (axial, parallel zur Rotationsachse) gegeneinander abgestützt sind.

In Figur2a ist erkennbar, dass der Statorkern 6 zu einer ersten axialen Außenseite hin einen ersten Bereich 6.1 und zu einer zweiten axialen Außenseite hin einen zweiten Bereich 6.2 umfasst. Der erste Bereich 6.1 bildet Statorzähne 9 und Wickelnuten 10 in Umfangsrichtung abwechselnd an der ersten axialen Außenseite zum ersten Rotor 2.1 hin aus, der zweite Bereich 6.2 bildet Statorzähne 9 und Wickelnuten 10 in Umfangsrichtung abwechselnd an der zweiten axialen Außenseite zum zweiten Rotor 2.2 hin aus. In Figur 2a verläuft die Schnittebene im ersten Bereich 6.1 durch eine Wickelnut 10 und im zweiten Bereich 6.2 durch einen Statorzahn 9. Dies ist dadurch begründet, dass die Statorzähne 9 und die Wickelnuten 10 des ersten Bereichs 6.1 zu den Statorzähnen 9 und den Wickelnuten 10 des zweiten Bereichs 6.2 um die Rotationsachse 12 verdreht angeordnet sind, in anderen Worten also in Umfangsrichtung versetzt angeordnet sind.

In Figur 2b ist eine erste Spulenanordnug 5.1 gezeigt, welche abschnittsweise in der Wickelnut 10 des ersten Bereichs 6.1 verläuft. Insbesondere handelt es sich bei der ersten Spulenanordnung 5.1 um eine verteilte Wicklung. Weiter ist eine zweite Spulenanordnung 5.2 im zweiten Bereich 6.2 dargestellt. Hierbei ist ersichtlich, dass die erste Spulenanordnung 5.1 in Umfangsrichtung versetzt zur zweiten Spulenanordnung 5.2 angeordnet ist.

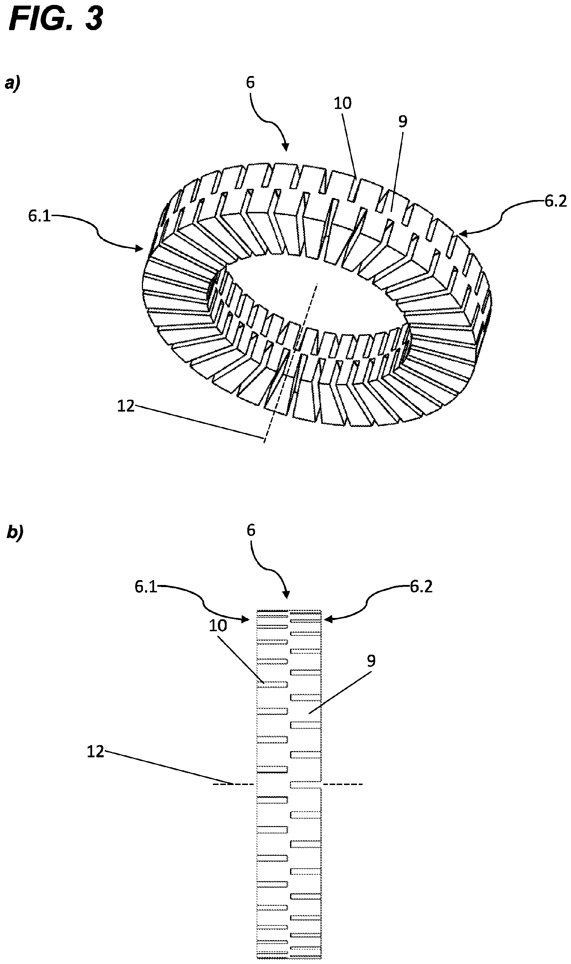

**Figur 3** zeigt eine perspektivische Darstellung sowie eine Aufsicht des Statorkerns 6 der elektrischen Maschine 1 aus Figur 2.

Hierbei ist insbesondre in Figur 3a ersichtlich, dass der erste Bereich 6.1 in Umfangsrichtung zu dem zweiten Bereich 6.2 versetzt angeordnet ist. In der hier gezeigten Ausführungsform sind die Statorzähne 9 des ersten Bereichs 6.1 den Wickelnuten 10 des zweiten Bereich 6.2 gegenüberliegend angeordnet. Weiter sind die Statorzähne 9 und die Wickelnuten gleichmäßig im ersten Bereich 6.1 als auch im zweiten Bereich 6.2 verteilt. Die gezeigte Ausführungsform des Statorkerns 6 ist mit ihren in Umfangsrichtung schmalen Statorzähnen 9 sowie den Wickelnuten 10 mit konstantem Querschnitt für eine verteilte Wicklung vorgesehen.

In Figur 3b ist ersichtlich, dass trotz einer kurzen axialen Baulänge des Storkerns 6 genügend Material als Tragstruktur zwischen einem Statorzahn 9 des ersten Bereichs 6.1 und einem diagonal benachbarten Statorzahn 9 des zweiten Bereichs 6.2 verbleibt. Dies wirkt sich ebenfalls positiv auf die elektro-magnetischen Eigenschaften des Statorkerns 6 aus.

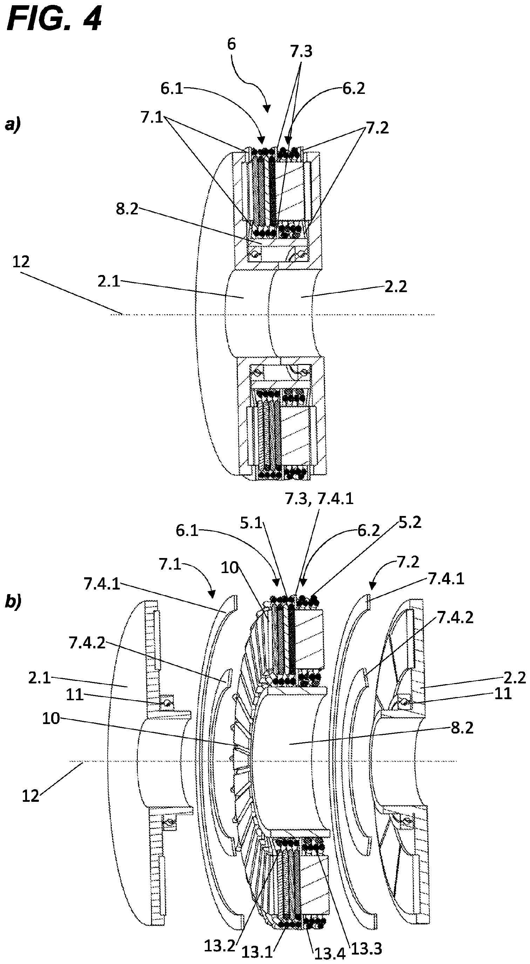

**Figur 4** zeigt einen perspektivischen Teilschnitt (Figur 4a) sowie einen Explosionsschnitt (Figur 4b) der elektrischen Maschine aus Figur 2. Auf eine Darstellung des ersten äußeren Gehäuseelements 8.1 wurde aus Gründen der Übersichtlichkeit verzichtet.

Neben der Funktion der Fixierung des Statorkerns 6 bilden die Stege 7 mit dem ersten äußeren Gehäuseelement 8.1 und dem zweiten inneren Gehäuseelement 8.2 einzelne Volumina aus für die Kühlung des Stators 3 mittels eines geeigneten Kühlmittels. So ist ein erster äußerer Steg 7.1 in dem ersten Bereich 6.1 an der ersten axialen Außenseite des Statorkerns 6 angeordnet. In der gezeigten Ausführungsform besteht der erste äußere Steg 7.1 aus mehreren Stegkomponenten 7.4 und umfasst eine erste Stegkomponente 7.4.1 in Form eines Rings, der radial zwischen dem ersten Gehäuseelement 8.1 und der radialen Außenseite des Statorkerns 6 angeordnet ist, sowie eine zweite Stegkomponente 7.4.2 in Form eines Rings, der radial zwischen dem zweiten inneren Gehäuseelement 8.2 und der radialen Innenseite des Statorkerns 6 angeordnet ist.

Weiter ist ein zweiter äußerer Steg 7.2 in dem zweiten Bereich 6.2 an der zweiten axialen Außenseite des Statorkerns 6 angeordnet. In der gezeigten Ausführungsform besteht der zweite äußere Steg 7.2 aus mehreren Stegkomponenten 7.4 und umfasst eine erste Stegkomponente 7.4.1 in Form eines Rings, der radial zwischen dem ersten Gehäuseelement 8.1 und der radialen Außenseite des Statorkerns 6 angeordnet ist, sowie eine zweite Stegkomponente 7.4.2 in Form eines Rings, der radial zwischen dem zweiten inneren Gehäuseelement 8.2 und der radialen Innenseite des Statorkerns 6 angeordnet ist.

In axialer Richtung zwischen dem ersten Bereich 6.1 und dem zweiten Bereich 6.2 ist ein innenliegender Steg 7.3 angeordnet. In der gezeigten Ausführungsform besteht der innenliegende Steg 7.3 aus mehreren Stegkomponenten 7.4 und umfasst eine erste Stegkomponente 7.4.1 in Form eines Rings, der radial zwischen dem ersten Gehäuseelement 8.1 und der radialen Außenseite des Statorkerns 6 angeordnet ist, sowie eine zweite Stegkomponente 7.4.2 in Form eines Rings, der radial zwischen dem zweiten inneren Gehäuseelement 8.2 und der radialen Innenseite des Statorkerns 6 angeordnet ist.

Somit ergeben sich in der gezeigten Ausführungsform der elektrischen Maschine 1 vier Volumen durch die Anordnung von erstem äußeren Gehäuse 8.1, zweitem inneren Gehäuse 8.2, erstem äußeren Steg 7.1, zweitem äußeren Steg 7.2, innenliegendem Steg 7.3 sowie dem Rotorkern.

Ein erstes äußeres Volumen 13.1 ist im ersten Bereich 6.1 zwischen dem erstem Gehäuseelement 8.1 und der radialen Außenseite des Statorkerns 6 sowie zwischen dem ersten äußeren Steg 7.1 und dem innenliegenden Steg 7.3 ausgebildet. Ein erstes inneres Volumen 13.2 ist im ersten Bereich 6.1 zwischen der radialen Innenseite des Statorkerns 6 und dem zweiten inneren Gehäuseelement 8.2 sowie zwischen dem ersten äußeren Steg 7.1 und dem innenliegenden Steg 7.3 ausgebildet.

Das erste äußere Volumen 13.2 ist dabei über die Wickelnuten 10 des ersten Bereichs 6.1 in Verbindung mit der ersten Spulenanordnung 5.1 mit dem ersten inneren Volumen 13.2 verbunden. Eine Abdichtung der Wickelnuten 10 in axialer Richtung ist aus Gründen der Übersichtlichkeit nicht dargestellt.

Ein zweites inneres Volumen 13.3 ist im zweiten Bereich 5.2 zwischen der radialen Innenseite des Statorkerns 6 und dem zweiten inneren Gehäuseelement 8.2 sowie zwischen dem zweiten äußeren Steg 7.2 und dem innenliegenden Steg 7.3 ausgebildet. Die zweite Stegkomponente 7.4.2 des innenliegenden Stegs 7.3 verfügt über Öffnungen 14 zur Verbindung des ersten inneren Volumens 13.2 zu dem zweiten inneren Volumen 13.3.

Ein zweites äußeres Volumen 13.4 ist im zweiten Bereich 5.2 zwischen dem erstem Gehäuseelement 8.1 und der radialen Außenseite des Statorkerns 6 sowie zwischen dem zweiten äußeren Steg 7.2 und dem innenliegenden Steg 7.3 ausgebildet. Das zweite innere Volumen 13.3 ist dabei über die Wickelnuten 10 des zweiten Bereichs 6.2 in Verbindung mit der zweiten Spulenanordnung 5.2 mit dem zweiten äußeren Volumen 13.4 verbunden. Eine Abdichtung der Wickelnuten 10 in axialer Richtung ist aus Gründen der Übersichtlichkeit nicht dargestellt.

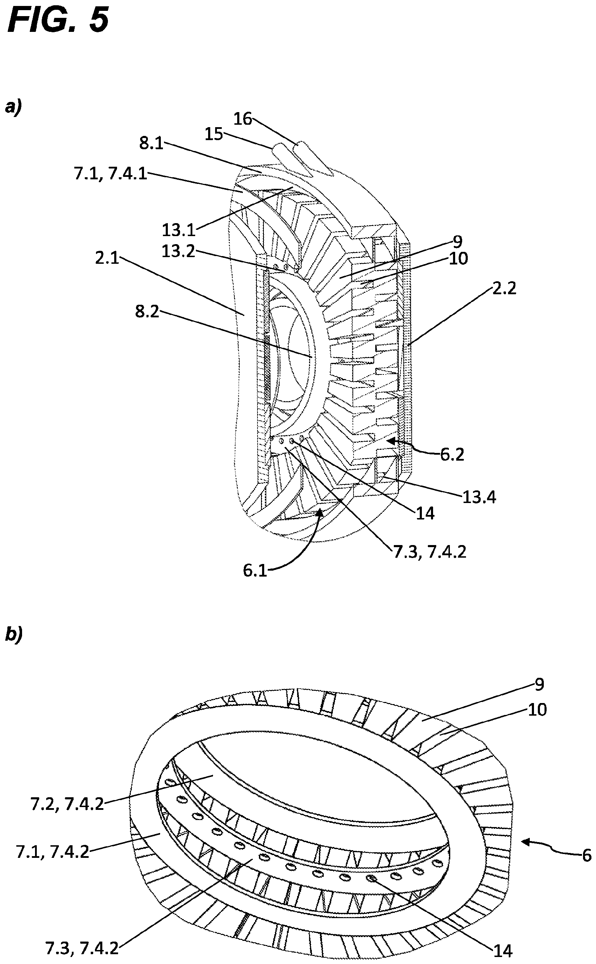

**Figur 5** zeigt einen perspektivischen Teilschnitt (Figur 5a) wesentlicher Komponenten der elektrischen Maschine 1 aus Figur 2 sowie eine perspektivische Detailansicht (Figur 5b).

Zur Zuleitung von geeignetem Kühlmittel in das erste äußere Volumen 13.1 ist eine Zuleitung 15 im ersten äußeren Gehäuseelement 8.1 beinhaltet. Um das geeignete Kühlmittel aus dem Stator 3 abzuleiten und somit einen Kühlmittelfluss zu ermöglichen, ist im ersten äußeren Gehäuseelement 8.1 eine Rückleitung 16 beinhaltet, die mit dem zweiten äußeren Volumen 13.4 verbunden ist.

Die Zuleitung 15 ist mit dem ersten äußeren Volumen 13.1 derart angeordnet, dass das geeignete Kühlmittel zunächst im ersten äußeren Volumen 13.1 in Umfangsrichtung verteilt wird und somit insbesondere bei einer als verteilten Wicklung realisierten ersten Spulenanordnung 5.1 die im ersten äußeren Volumen 13.1 ausgebildeten Wickelköpfe thermisch reguliert.

Ebenso erfolgt im ersten inneren Volumen 13.2 eine Verteilung des geeigneten Kühlmittels in Umfangsrichtung.

Der innenliegende Steg 7.3 verfügt über mehrere Öffnungen 14 zur Verbindung des ersten inneren Volumens 13.2 zu dem zweiten inneren Volumen 13.3. Insbesondere sind die Öffnungen 14 derart positioniert, dass eine gleichmäßige Verteilung in Umfangsrichtung in dem ersten inneren Volumen 13.2 erfolgt. Die Öffnungen 14 sind wie in Figur 5, 5b gezeigt radial innen derart positioniert, dass das Kühlmedium möglichst weit radial innen von dem ersten inneren Volumen 13.2 zu dem zweiten inneren Volumen 13.3 strömt, so dass eine möglichst gute Umströmung der im ersten inneren Volumen 13.2 befindlichen Wickelköpfe der als verteilten Wicklung ausgeführten ersten Spulenanordnung 5.1 oder der im zweiten inneren Volumen 13.3 befindlichen Wickelköpfe der als verteilten Wicklung ausgeführten zweiten Spulenanordnungen 5.2 erfolgt.

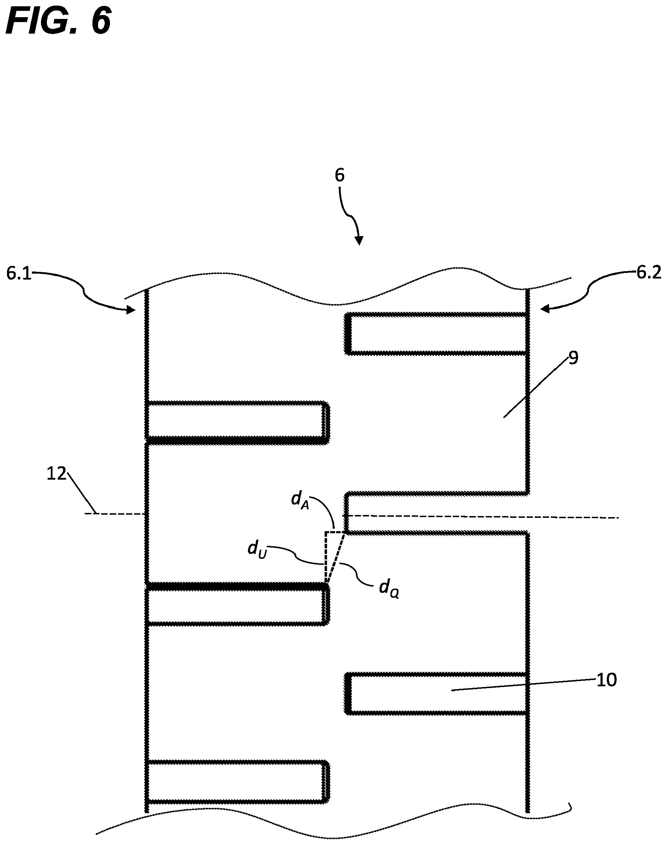

**Figur 6** zeigt eine Detailaufsicht des Statorkerns der elektrischen Maschine aus Figur 2. Die Wickelnuten 10 des ersten Bereichs 6.1 weisen zu den Wickelnuten 10 des zweiten Bereichs 6.2 auf einer äußeren radial umlaufenden Fläche in Umfangsrichtung einen Abstand $d_U$ auf, die Wickelnuten 10 des ersten Bereichs 6.1 weisen zu den Wickelnuten 10 des zweiten Bereichs 6.2 auf der äußeren radial umlaufenden Fläche in axialer Richtung einen Abstand $d_A$ auf. Dabei definiert $k = d_A / d_U$ ein Verhältnis, wobei $k < 1{,}5$ ist, vorzugsweise k<0.5, k<0.25, k<0,1 k<0.05.

Insbesondere bei schmalen Statorzähnen 9 wie bei verteilten Wicklungen erforderlich, ist *k* vorteilhafterweise kleiner 1 zu wählen, sodass trotz geringer axialer Baulänge des Statorkerns 6 mechanische Stabilität gewährleitstet ist. Insbesondere bei Einzelzahnwicklungen kann aufgrund breiterer Statorzähne 9 k<0.5, besonders bevorzugt k<0.25 gewählt werden, ohne dass dies zu Lasten der mechanischen Stabilität ginge.

### Bezugszeichenliste

1    Elektrische Maschine
2    Rotor
2.1   Erster Rotor
2.2.  Zweiter Rotor
3    Stator
4    Magnete
5    Spulenanordnung
5.1   erste Spulenanordnung
5.2   zweite Spulenanordnung
6    Statorkern
6.1   erster Bereich

6.2   zweiter Bereich
7    Stegstruktur
7.1   erster äußerer Steg
7.2   zweiter äußerer Steg
7.3   innenliegender Steg
7.4   Stegkomponente
7.4.1  erste Stegkomponente
7.4.2  zweite Stegkomponente
8    Gehäuse
8.1   erstes äußeres Gehäuseelement
8.2   zweites inneres Gehäuseelement
9    Statorzahn
10    Wickelnut
11    Lagerung
12    Rotationsachse
13.1   erstes äußeres Volumen
13.2   erstes inneres Volumen
13.3   zweites inneres Volumen
13.4   zweites äußeres Volumen
14    Öffnungen
15    Zuleitung

16    Rückleitung

### Patentansprüche

1.  Stator (3) einer elektrischen Maschine (1) in Axialflussbauweise, mit einer Rotationsachse (12) und einem eine bauliche Einheit ausbildenden Statorkern (6),

    der einen ersten Bereich (6.1), der zu einer ersten axialen Außenseite hin ausgerichtet ist, sowie einen zweiten Bereich (6.2), der zu einer zweiten axialen Außenseite hin ausgerichtet ist umfasst, wobei
    im ersten Bereich (6.1) in Umfangsrichtung abwechselnd Statorzähne (9) und Wickelnuten (10) an der ersten Außenseite ausgebildet sind, und
    im zweiten Bereich (6.2) in Umfangsrichtung abwechselnd Statorzähne (9) und Wickelnuten (10) an der zweiten Außenseite ausgebildet sind,
    **gekennzeichnet dadurch, dass**
    die Statorzähne (9) des ersten Bereichs (6.1) versetzt zu den Statorzähnen (9) des zweiten Bereichs (6.2) ausgerichtet sind, sowie
    die Wickelnuten (10) des ersten Bereichs (6.1) zu den Wickelnuten (10) des zweiten Bereichs (6.2) auf einer äußeren radial umlaufenden Fläche in Umfangsrichtung derart beabstandet sind, dass auf der äußeren radial umlaufenden Fläche in axialer Richtung keine Überdeckung der Wickelnuten (10) des ersten Bereichs (6.1) zu den Wickelnuten (10) des zweiten Bereichs (6.2) entsteht.

**2.** Stator (3) nach Anspruch 1, umfassend

> eine erste Spulenanordnung (5.1) im ersten Bereich (6.1), wobei die erste Spulenanordnung (5.1) abschnittsweise in den Wickelnuten (10) des ersten Bereichs (6.1) beinhaltet ist und eine zweite Spulenanordnung (5.2) im zweiten Bereich (6.2), wobei die zweite Spulenanordnung (5.2) abschnittsweise in den Wickelnuten (10) des zweiten Bereichs (6.2) beinhaltet ist.

**3.** Stator (3) nach Anspruch 1 oder 2, wobei

> die Wickelnuten (10) des ersten Bereichs (6.1) zu den Wickelnuten (10) des zweiten Bereichs (6.2) auf einer äußeren radial umlaufenden Fläche in Umfangsrichtung einen Abstand $d_U$ aufweisen, die Wickelnuten des ersten Bereichs zu den Wickelnuten (10) des zweiten Bereichs (6.2) auf einer äußeren radial umlaufenden Fläche in axialer Richtung einen Abstand $d_A$ aufweisen, ein Verhältnis $k$ von $d_A$ zu $d_U$ definiert ist, wobei
> $k < 1{,}5$ ist, vorzugsweise $k<0.5$, $k<0.25$, $k<0{,}1$ $k<0.05$

**4.** Stator (3) nach Anspruch 2 oder 3, wobei
die erste Spulenanordnung (5.1) in Form einer verteilten Wicklung realisiert ist und die zweite Spulenanordnung (5.2) in Form einer verteilten Wicklung realisiert ist.

**5.** Stator (3) nach einem der Ansprüche 1 bis 4, wobei

> die Statorzähne (9) des ersten Bereichs (6.1) und die Wickelnuten (10) des ersten Bereichs (6.1) ein erstes Muster an der ersten axialen Außenseite ausbilden, welches mehrfach rotationssymmetrisch bezüglich der Rotationsache (12) ist,
> die Statorzähne (9) des zweiten Bereichs (6.2) und die Wickelnuten (10) des zweiten Bereichs (6.2) ein zweites Muster an der zweiten axialen Außenseite ausbilden, welches mehrfach rotationssymmetrisch bezüglich der Rotationsache (12) ist.

**6.** Stator (3) nach einem der Ansprüche 1 bis 5, wobei der Statorkern (6) als gewickeltes Bauteil realisiert ist.

**7.** Stator (3) nach einem der Ansprüche 1 bis 5, wobei der Statorkern (6) aus einem weichmagnetischen Pulververbundwerkstoff realisiert ist.

**8.** Stator (3) nach Anspruch 7, wobei der Statorkern (6) mehrere Segmente umfasst.

**9.** Elektrische Maschine (1) mit einem Stator (3) nach einem der Ansprüche 1 bis 8, wobei der Stator (3) axial zwischen einem ersten Rotor (2.1) und einem zweiten Rotor (2.2) angeordnet ist.

**10.** Fahrzeug mit einer elektrischen Maschine (1) nach Anspruch 9.

**Claims**

**1.** A stator (3) of an electric machine (1) in an axial flux design, having an axis of rotation (12) and a stator core (6) forming a structural unit,

> which comprises a first region (6.1) which is oriented towards a first axial outer side, and a second region (6.2) which is oriented towards a second axial outer side, wherein
> in the first region (6.1), stator teeth (9) and winding grooves (10) are formed in an alternating manner in the circumferential direction on the first outer side, and
> in the second region (6.2), stator teeth (9) and winding grooves (10) are formed in an alternating manner in the circumferential direction on the second outer side,
> **characterized in that**
> the stator teeth (9) of the first region (6.1) are offset with respect to the stator teeth (9) of the second region (6.2), and
> the winding grooves (10) of the first region (6.1) are spaced apart from the winding grooves (10) of the second region (6.2) on an outer radially circumferential surface in the circumferential direction such that there is no overlap of the winding grooves (10) of the first region (6.1) with the winding grooves (10) of the second region (6.2) on the outer radially circumferential surface in the axial direction.

**2.** The stator (3) according to claim 1, comprising

> a first coil arrangement (5.1) in the first region (6.1), wherein the first coil arrangement (5.1) is contained in the winding grooves (10) of the first region (6.1) in sections, and
> a second coil arrangement (5.2) in the second region (6.2), wherein the second coil arrangement (5.2) is contained in the winding grooves (10) of the second region (6.2) in sections.

**3.** The stator (3) according to claim 1 or 2, wherein

> the winding grooves (10) of the first region (6.1) are at a distance $du$ from the winding grooves (10) of the second region (6.2) on an outer radially circumferential surface in the circumferential direction, wherein the winding grooves of the first region are at a distance $d_A$ from the winding grooves (10) of the second region (6.2) on an outer radially circumferential surface in the axial direction and a ratio $k$ of $d_A$ to $d_U$ is defined, wherein

$k < 1.5$, preferably $k < 0.5$, $k < 0.25$, $k < 0.1$, $k < 0.05$.

4. The stator (3) according to claim 2 or 3, wherein

the first coil arrangement (5.1) is implemented in the form of a distributed winding and the second coil arrangement (5.2) is implemented in the form of a distributed winding.

5. The stator (3) according to one of claims 1 to 4, wherein

the stator teeth (9) of the first region (6.1) and the winding grooves (10) of the first region (6.1) form a first pattern on the first axial outer side, which is repeatedly rotationally symmetrical with respect to the axis of rotation (12),
the stator teeth (9) of the second region (6.2) and the winding grooves (10) of the second region (6.2) form a second pattern on the second axial outer side, which is repeatedly rotationally symmetrical with respect to the axis of rotation (12).

6. The stator (3) according to one of claims 1 to 5, wherein the stator core (6) is implemented as a wound component.

7. The stator (3) according to one of claims 1 to 5, wherein the stator core (6) is implemented using a soft magnetic powder composite material.

8. The stator (3) according to claim 7, wherein the stator core (6) comprises multiple segments.

9. An electric machine (1) having a stator (3) according to one of claims 1 to 8, wherein the stator (3) is arranged axially between a first rotor (2.1) and a second rotor (2.2).

10. A vehicle having an electric machine (1) according to claim 9.

**Revendications**

1. Stator (3) d'une machine électrique (1) à conception à flux axial, comportant un axe de rotation (12) et un noyau de stator (6) formant une unité structurale,

qui comprend une première zone (6.1) qui est alignée vers un premier côté extérieur axial, ainsi qu'une seconde zone (6.2) qui est alignée vers un second côté extérieur axial, dans lequel des dents de stator (9) et des rainures d'enroulement (10) sont formées en alternance sur le premier côté extérieur dans la première zone (6.1) dans la direction circonférentielle, et

des dents de stator (9) et des rainures d'enroulement (10) sont formées en alternance sur le second côté extérieur dans la seconde zone (6.2) dans la direction circonférentielle,
**caractérisé en ce que**
les dents de stator (9) de la première zone (6.1) sont orientés de manière décalée par rapport aux dents de stator (9) de la seconde zone (6.2), et

les rainures d'enroulement (10) de la première zone (6.1) sont espacées des rainures d'enroulement (10) de la seconde zone (6.2) sur une surface radiale circonférentielle extérieure dans la direction circonférentielle de telle sorte que, sur la surface radiale circonférentielle extérieure dans la direction axiale, aucun chevauchement des rainures d'enroulement (10) de la première zone (6.1) n'est créé avec les rainures d'enroulement (10) de la seconde zone (6.2).

2. Stator (3) selon la revendication 1, comprenant

un premier ensemble de bobines (5.1) dans la première zone (6.1), dans lequel le premier ensemble de bobines (5.1) est contenu à certains endroits dans les rainures d'enroulement (10) de la première zone (6.1) et
un second ensemble de bobines (5.2) dans la seconde zone (6.2), dans lequel le second ensemble de bobines (5.2) est contenu à certains endroits dans les rainures d'enroulement (10) de la seconde zone (6.2).

3. Stator (3) selon la revendication 1 ou 2, dans lequel

les rainures d'enroulement (10) de la première zone (6.1) présentent une distance $du$ par rapport aux rainures d'enroulement (10) de la seconde zone (6.2) sur une surface périphérique radiale extérieure dans la direction circonférentielle, les rainures d'enroulement de la première zone présentent une distance $d_A$ par rapport aux rainures d'enroulement (10) de la seconde zone (6.2) sur une surface périphérique radiale extérieure dans la direction axiale, une relation $k$ de $d_A$ à $d_U$ est définie,
$k < 1,5$, de préférence $k<0,5$, $k<0,25$, $k<0,1$ $k<0,05$

4. Stator (3) selon la revendication 2 ou 3, dans lequel

le premier ensemble de bobines (5.1) est réalisé sous forme d'un enroulement réparti et le second ensemble de bobines (5.2) est réalisé sous la forme d'un enroulement réparti.

5. Stator (3) selon l'une quelconque des revendications 1 à 4, dans lequel

les dents de stator (9) de la première zone (6.1) et les rainures d'enroulement (10) de la première zone (6.1) forment sur le premier côté axial extérieur un premier motif qui présente une symétrie de rotation multiple par rapport à l'axe de rotation (12),

les dents de stator (9) de la seconde zone (6.2) et les rainures d'enroulement (10) de la seconde zone (6.2) forment sur le second côté axial extérieur un second motif qui présente une symétrie de rotation multiple par rapport à l'axe de rotation (12).

6. Stator (3) selon l'une quelconque des revendications 1 à 5, dans lequel le noyau de stator (6) est réalisé sous la forme d'un élément enroulé.

7. Stator (3) selon l'une quelconque des revendications 1 à 5, dans lequel le noyau de stator (6) est réalisé à partir d'un matériau composite à base de poudre magnétique douce.

8. Stator (3) selon la revendication 7, dans lequel le noyau de stator (6) comprend une pluralité de segments.

9. Machine électrique (1) comportant un stator (3) selon l'une quelconque des revendications 1 à 8, dans laquelle le stator (3) est disposé axialement entre un premier rotor (2.1) et un second rotor (2.2).

10. Véhicule comportant une machine électrique (1) selon la revendication 9.

# *FIG. 1*

*a)*

**Stand der Technik**

*b)*

**Stand der Technik**

# FIG. 2

# FIG. 3

a)

b)

# FIG. 4

*a)*

*b)*

# FIG. 5

a)

b)

# FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 109194082 A
- EP 2606561 B1
- EP 1538727 A
- EP 3485558 A
- US 9071117 BB
- KR 101070230 B1
- WO 9533596 A1
- CN 201509139
- US 2014361653 A1